# EUROPEAN PATENT APPLICATION

(11) **EP 4 372 506 A1**
(43) Date of publication of application: **22.05.2024**
(21) Application number: 22207785.1
(22) Date of filing: 16.11.2022
(51) Int. Cl.: G05B 23/02

(54) **SYSTEM AND METHOD OF DETECTING AT LEAST ONE ANOMALY IN AN INDUSTRIAL PROCESS**

(71) Applicant: Siemens Aktiengesellschaft, 80333 München (DE)
(72) Inventor: Thamm, Aleksandra, 90762 Fürth (DE); Wiedemann, Markus, 90513 Zirndorf (DE)
(74) Representative: Siemens Patent Attorneys

(57) **Abstract**

System and method of detecting at least one anomaly in an industrial process (110) are disclosed. The method comprises: receiving at least one signal associated with the computer-controlled machine (112, 114 and 220) indicative of a runtime operation performed by the computer-controlled machine (112, 114 and 220); classifying the signal (X1, X2, X3) as valid or invalid by a trained discriminator, wherein the trained discriminator is generated using a Generative Adversarial Network (GAN) architecture; predicting an operation performed by the computer-controlled machine (112, 114 and 220) by the trained discriminator in response to the signal (X1, X2, X3); detecting the anomaly when the signal (X1, X2, X3) is classified as invalid or when the predicted operation is different from the runtime operation performed by the computer-controlled machine (112, 114 and 220); determining a fault in the computer-controlled machine (112, 114 and 220) based on the detected anomaly, wherein the fault is determined by isolating the anomaly in the spectrum and/or the datapoints.

## Description

The present invention relates to detecting anomaly in an industrial process. Particularly the present invention relates to detecting anomaly using a combination of supervised and unsupervised learning techniques.

An industrial process is generally implemented using one or more computer-controlled machines. Examples of the computer-controlled machines include automated control of tools such as drills, lathes, mills, grinders, routers and 3D printers. Other examples of computer-controlled machines include autonomous ground vehicles (AGVs), robotic arms and the like. Malfunctioning of the computer-controlled machines negatively impacts the industrial process. For example, breakage of a drill during a machining process in a machine tool results in disruption of the industrial process and causes unexpected downtime. The delay caused by the machine downtime also represents a further cost factor. Strictly speaking, a drill break is an anomaly of the drilling process, which is noticeable in various signals on and in the machine tool.

Regardless of how the anomaly manifests itself, it can also be detected in different ways. Common methods of detecting an anomaly include rule-based determination, supervised learning, and unsupervised learning. Rule-based determination is possible when a standard or expected signal and the anomalies are well defined. Rule-based determination quickly reaches its limits, especially since anomalies whose manifestation is unknown or are not necessarily definable. In addition, it is difficult to define more complex signals, where the actual state depends strongly on the operation conditions of the computer-controlled machines. In supervised learning a neural network can be supervised (monitored) trained on the basis of example anomalies. The existence or absence of an anomaly is described by the label (ground truth) required for supervised training. However, due to the nature of anomalies, it rarely occurs that the anomalies are manifested with the same characteristics. In addition, this method can only detect anomalies that are also present in the training data and are therefore also known. In unsupervised learning, the neural network learns what the normal state of the signal looks like and detects anomalies in it. However, unlike the other two methods, it is not possible to classify what kind of anomaly occurs.

Therefore, there exists a need for improvements in the methods to detect deviations in the behavior of the machines and accordingly detect anomalies the industrial process.

In an example, the object is achieved by a method of detecting at least one anomaly in an industrial process, wherein the industrial process is performed at least in part by a computer-controlled machine, wherein the method comprises receiving at least one signal associated with the computer-controlled machine indicative of a runtime operation performed by the computer-controlled machine, wherein the signal comprises at least one of one or more spectrum and one or more datapoints generated by sensors associated with the computer-controlled machine; classifying the signal as valid or invalid by a trained discriminator, wherein the trained discriminator is generated using a Generative Adversarial Network (GAN) architecture, wherein the trained discriminator is generated based on standard signals and simulated signals generated by a generator of the GAN architecture, wherein the standard signals comprise at least one of default signals expected from the computer-controlled machine and prior signals generated from the computer-controlled machine; predicting an operation performed by the computer-controlled machine by the trained discriminator in response to the signal; detecting the anomaly when the signal is classified as invalid or when the predicted operation is different from the runtime operation performed by the computer-controlled machine; determining a fault in the computer-controlled machine based on the detected anomaly, wherein the fault is determined by isolating the anomaly in the spectrum and/or the datapoints.

In another example, the object is achieved by a computer readable medium having machine-readable instructions stored therein, which when executed by a processing unit, cause the processing unit to perform steps according to the method disclosed herein.

In yet another example, the object is achieved by a system for detecting anomalies in an industrial process, the system comprising a server comprising at least one processing unit configured to coordinate execution of one or more the method steps disclosed herein, executable in a distributed computing environment.

In yet another optional example, the object of the present invention is achieved by a method of detecting at least one anomaly in the operation of computer-controlled machine, wherein an industrial process is performed at least in part by the computer-controlled machine, wherein the method comprises receiving at least one signal associated with the computer-controlled machine indicative of a runtime operation performed by the computer-controlled machine, wherein the signal comprises at least one of one or more spectrum and one or more datapoints generated by sensors associated with the computer-controlled machine; classifying the signal as valid or invalid by a trained discriminator, wherein the trained discriminator is generated using a Generative Adversarial Network (GAN) architecture, wherein the trained discriminator is generated based on standard signals and simulated signals generated by a generator of the GAN architecture, wherein the standard signals comprise at least one of default signals expected from the computer-controlled machine and prior signals generated from the computer-controlled machine; predicting an operation performed by the computer-controlled machine by the trained discriminator in response to the signal; detecting the anomaly when the signal is classified as invalid or when the predicted operation is different from the runtime operation performed by the computer-controlled machine; determining a fault in the computer-controlled machine based on the detected anomaly, wherein the fault is determined by isolating the anomaly in the spectrum and/or the datapoints.

The present invention advantageously combines the supervised and unsupervised learning methods to detect anomalies in an industrial process. Further, the present invention provides methods to isolate one or more faults based on the detected anomalies. The present invention detects anomaly when the trained discriminator classifies a signal from computer-controlled machine as invalid or predicts a different operation, different from what was performed by the machine. This method of classification both signal and operation enables accurate anomaly detection. By training the discriminator with prior signals generated from the machine, the present invention adapts to the operating conditions of the machine, which results in accurate anomaly detection.

Additionally, the present invention is not limited to sensor signal. In operation, process signal along with sensor signals are analyzed. These signals may be internally or externally measured, can be used without having to know what the signal is like. Therefore, costs of using an industry expert for anomaly detection and analysis can be reduced. Further, during runtime only the trained discriminator is executed, therefore total computing effort is significantly lower and therefore signals from the machines where the throughput of data is high can also be analyzed. The runtime efficiency enables the present invention to be implemented on devices that have low computation capability. Therefore, the present invention saves hardware costs (since several applications can run in parallel on one edge device) and does not require any changes to the machine.

By improving the accuracy of anomaly detection, precise fault isolation is realized. Further, by localizing the fault and quantitatively analyzing the anomaly/anomalies, remote condition monitoring is made more effective in cases where anomalies are not previously known. Furthermore, the runtime efficiency of the present invention enables fault isolation and anomaly analysis in real-time. Therefore, the present invention not only enables accurate anomaly detection but also fast analysis to identify fault. Fast fault diagnosis reduces the downtime and improves the overall efficiency of the industrial process that is performed.

Before describing the suggested invention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

As used herein "industrial process" refers to one or more processes performed in an industrial facility. An "industrial facility" refers to a facility that for manufacture, production that may be semi or completely automated. For example, industrial facility may include laboratory facility, building facility, a manufacturing facility and the like. The industrial facility may also refer to a combination of the aforementioned facilities. Examples of the industrial process may include painting a body of an automobile, assembling an automobile or a part of an automobile, manufacturing a chemical compound, transporting material in a warehouse, etc.

The industrial facility includes machines such as a machine tool, a mobile robot, a driverless transport system, etc. The machines are computer-controlled machines (also referred to as machines herein) and therefore able to be controlled using a software executed either on the machine itself or on a computing resource separate from the machine. The present invention is elaborated from the perspective of a machine tool such as a drilling tool. A person skilled in the art would appreciate that the drilling tool is an embodiment. The method disclosed in the present invention is applicable to any computer-controlled machine, such as a robotic arm or a 3D printer.

The present invention proposes a GAN that learns target state of the machines based on the default signals expected from the machines and prior signals generated from the machines. At runtime, the trained discriminator of the GAN classifies signals and operations performed by the machines. Through the classification, previously unknown anomalies can be detected and classified to localize fault. The detailed methodology of the present invention is explained hereinbelow.

The method includes receiving at least one signal associated with the computer-controlled machine indicative of a runtime operation performed by the computer-controlled machine. The signal comprises at least one of spectrums and datapoints generated by sensors associated with the computer-controlled machine. In an embodiment, the signal comprises a tuple of the datapoints generated from the sensors associated with the machine and the spectrum. An example of the spectrum is a Fourier transformation of the datapoints. The spectrum is an output of frequency analysis of the datapoints received from the sensors. In another embodiment, the signal comprises datapoints from the sensors, the spectrum, and a spectrogram. The spectrogram is a visual representation of the strength of the signal over time at various frequencies. Accordingly, the method may include generating the spectrum and the spectrogram using Fourier analysis.

The method further includes classifying the signal as valid or invalid by a trained discriminator. The trained discriminator is generated using a Generative Adversarial Network (GAN) architecture. In an embodiment, the GAN architecture uses an Auxiliary Classifier and is an ACGAN architecture. ACGAN architecture is a type of GAN, particularly a conditional GAN that trains the discriminator to predict a class. In the present invention, the ACGAN architecture enables the trained discriminator to classify the signal into valid and invalid classes. Accordingly, the method may include classifying the signal as valid or invalid by the trained discriminator generated using ACGAN architecture. The trained discriminator is generated based on standard signals and simulated signals generated by a generator of the GAN architecture. The standard signals comprise at least one of default signals expected from the computer-controlled machine and prior signals generated from the computer-controlled machine.

The method may further include generating the trained discriminator by training a discriminator of the GAN architecture based on the standard signals and the simulated signals generated by the generator of the GAN architecture. In the embodiment where ACGAN architecture is used, the method may include generating the trained discriminator by training a discriminator of the ACGAN architecture based on the standard signals and the simulated signals generated by the generator of the ACGAN architecture.

The method may include updating discriminator weights of the discriminator based on at least one of a discriminator loss function and a generator loss function. The discriminator loss function quantifies a misclassification of the standard signals as invalid. The generator loss function quantifies classification of the simulated signals as invalid. In effect, the generator loss function quantifies the accuracy of the discriminator. By using standard signals for training and by updating the discriminator weights based on the discriminator loss function and the generator loss function, the trained discriminator is trained to account for the characteristic of the machine.

In certain embodiments, the method may further include training the generator based on an output of the discriminator of the GAN. Further, the method may include updating generator weights of the generator based on the generator loss function. The generator weights are updated such that the generator is penalized when the discriminator classifies the simulated signal as invalid. The generator loss function is used to train the generator to trick the discriminator to classify a simulated signal as valid. The interplay between the generator loss function and the discriminator loss function improve the quality of the trained discriminator.

The method may also include training the discriminator of the GAN architecture with an updated training dataset. The updated training dataset includes updated standard operations and updated standard signals generated during runtime of the computer-controlled machine. By updating the training dataset, the discriminator is kept up to date with the operating conditions of the machine. In certain embodiments, the updation of the training dataset is performed at regular intervals. In other embodiments, the updation of the training dataset is performed only when an anomaly is detected.

The method may further include comparing the standard operations and the standard signals with the updated standard operations and the updated standard signals to identify a creeping wear in the machine; and retraining the discriminator based on the creeping wear. Accordingly, the present invention advantageously detects creeping wear in the machine and accounts for it while detecting anomaly.

The method includes predicting an operation performed by the computer-controlled machine by the trained discriminator in response to the signal. As used herein "operation" performed by the machine refers to an action or function performed by the machine. For example, the operation for a machine tool includes non-exhaustive set of actions hold, idle, up_cut, down_cut, up_feed, down_feed, etc. The type and nature of operation changes based on the machine. In another example, where the machine is a robotic arm, the operations may include up, down, forward, back, rotate, insert, etc. The nature of the operation impacts the generation of the trained discriminator. Accordingly, the method may include generating simulation operation by the generator, the discriminator of the GAN architecture is trained to predict the action that is performed/performable by the machine. Accordingly, considering the example of the machine tool, the simulation operation comprises actions including hold, idle, up_cut, down_cut, up_feed, down_feed performable by the machine tool.

By predicting the operation by the trained discriminator, the reliance on the validity of the signal is balanced. Accordingly, even if the signal may be classified as valid if the predicted action is not the action performed by the machine an anomaly can be detected.

The method includes detecting the anomaly when the signal is classified as invalid or when the predicted operation is different from the runtime operation performed by the machine. The present invention advantageously improves the accuracy of the anomaly detection as anomaly is detected when any one of the cases (invalid signal or incorrect operation prediction).

The method further includes determining a fault in the computer-controlled machine based on the detected anomaly. The fault is determined by isolating the anomaly in the spectrum and/or the datapoints. To isolate the anomaly, the method may include identifying at least one portion of the spectrum and/or anomalous datapoints in the signal classified as invalid. Accordingly, the present invention identifies the datapoints that resulted in the detection of the anomaly. These datapoints are referred to as the anomalous datapoints. In addition, the method isolates the portion of the spectrum that caused the classification of the signal as fake or caused the wrong operation to be predicted.

The identification of the anomalous datapoints and/or the portion of the spectrum can be used to identify what was the runtime operation performed that resulted in the anomaly to be detected. These operations are referred to as anomalous runtime operations. The method may accordingly include mapping the portion of the spectrum and/or anomalous datapoints to at least one anomalous runtime operation. The method may further include determining control commands provided to the computer-controlled machine associated with the anomalous runtime operation.

In an embodiment, the anomalous runtime operation is determined using explanations that are generated for the signal. The explanations may be generated using techniques such as saliency maps, layer-wise relevance propagation, grad-cam and the like. Accordingly, the method may include generating explanations illustrating an impact of the signal classified as invalid on the trained discriminator and mapping the portion of the spectrum and/or anomalous datapoints to the anomalous runtime operation based on the explanations. The method may further include analyzing the explanations to determine a root cause of at least one of the anomalies and the anomalous runtime operation.

Since it is known which action was made at runtime and that the signal is genuine, saliency maps (or LRP, GradCAM, or other methods) may be used to determine which input has now contributed to the anomalous runtime operation. Specifically, it is possible to determine what needs to be changed in the signal in order to classify the signal as "real" or to predict the right action.

By performing the root cause analysis using explanations, the function of the trained discriminator is analyzable and thereby the anomaly can be further analyzed and isolated to identify fault. Analysis of the anomaly can be further used to mitigate future anomalies. In an embodiment, the method includes determining modifications to the signal classified as invalid, wherein the trained discriminator classifies the modified signal as valid; and validating the modified signal when a modified operation predicted for the modified signal is one of standard operations associated with the standard signals, wherein the standard operations are performed to generate the standard signals. Accordingly, the present invention advantageously enables prognosis and mitigation operations that can be performed to avoid the anomaly.

The above method is implemented using a system that includes a processing unit that executes the steps disclosed herein in a distributed computing environment. The system may include a datahub configured to store the operations, the signals, the standard operations, the standard signals associated with the industrial process. The processing unit is configured to train the generator and the discriminator of Generative Adversarial Neural Network (GAN) with the standard operations and the standard signals. The training may be performed in by computing resources that can handle high computational requirements, such as a cloud computing platform. Further, the detection of anomaly in runtime can be done by computing resources that have low latency. For example, on the machine itself or on an industrial controller controlling the machine.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.
- Fig. 1: illustrates an industrial environment including a system for detecting anomalies in an industrial process, according to an embodiment of the present invention;
- Fig.2A-2C: illustrates training of a Generative Adversarial Network (GAN) to detect anomalies in the industrial process, according to an embodiment of the present invention;
- Fig. 3A-C: illustrates examples of anomalies detected in the industrial process, according to an embodiment of the present invention;
- Fig. 4: illustrates a method of detecting at least one anomaly in an industrial process, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth to provide a thorough understanding of one or more embodiments. It may be evident that such embodiments may be practiced without these specific details.

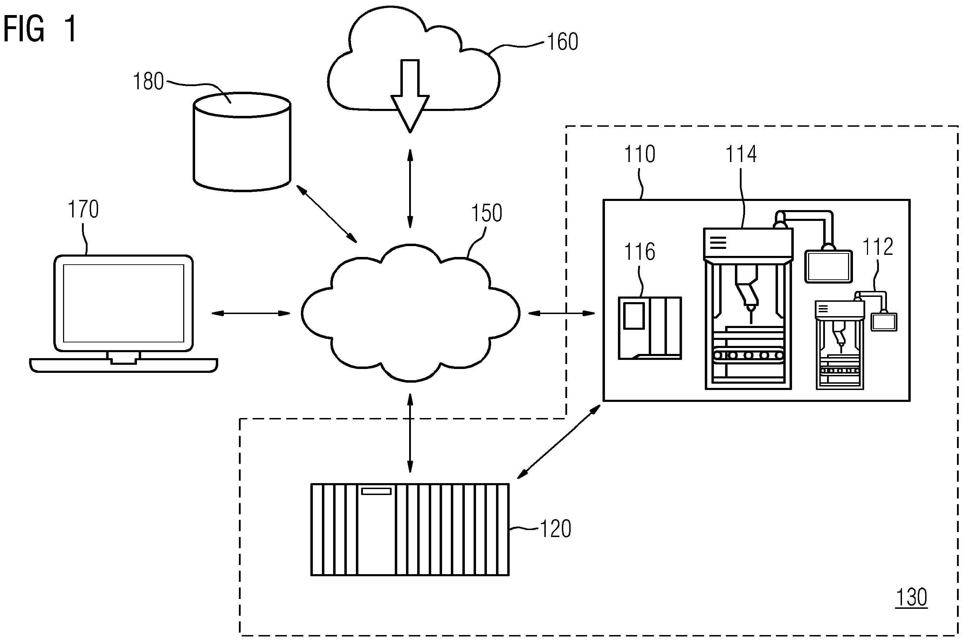

Fig. 1 illustrates an industrial environment 130 including a system 120 for detecting anomalies in an industrial process 110, according to an embodiment of the present invention. The industrial process 110 is depicted by computer-controlled machines 112 and 114 along with sensors 116. The system 120 is a control system that comprises one or more processors (processing units) configured to run applications for data acquisition, pre-processing and analysis directly at the computer-controlled machines 112 and 114. The control system 120 has two separate Ethernet interfaces. One for a cloud computing platform 160 via the Internet 150 another for a connection to the industrial environment 130. In addition to data processing, the system 120 is configured to generate control signals in response to detection of an anomaly, for example stopping the computer-controlled machines 112 and 114, in order to minimize damage.

Fig. 1 also shows a user device 170 capable of displaying a Graphical User Interface (GUI), on which the detected anomalies are displayed. Fig. 1 also illustrates a datahub 180 configured to store the operations, the signals, the standard operations, the standard signals associated with the industrial process 130. In an embodiment, the function of the system 120 may be implemented partly on the cloud platform 160 and partly in the industrial environment 130. In such an embodiment, one or more processors are configured to train a generator and a discriminator of Generative Adversarial Neural Network (GAN) with the standard operations and the standard signals stored in the datahub 180.

The detection of anomalies by the system 120 can be divided into three phases. When computer-controlled machines 112 and 114 are installed, the necessary data is collected as part of a calibration run to train the GAN architecture. In an embodiment, calibration may be carried out at regular intervals after installation of the machines 112 and 114. Old calibration data is archived/stored in the datahub 180 in order to continuously compare and detect if a creeping wear has occurred. After calibration, the GAN architecture is used to monitor the computer-controlled machines 112 and 114 in operation and to detect anomalies. If an anomaly has been found, the system 120 analyses it/enables analysis via the user device 170. For example, the system 120 may transmit data to the GUI to display interfering frequencies derived from the detected anomaly. A technician using the user device 170 can further interpret the displayed frequencies.

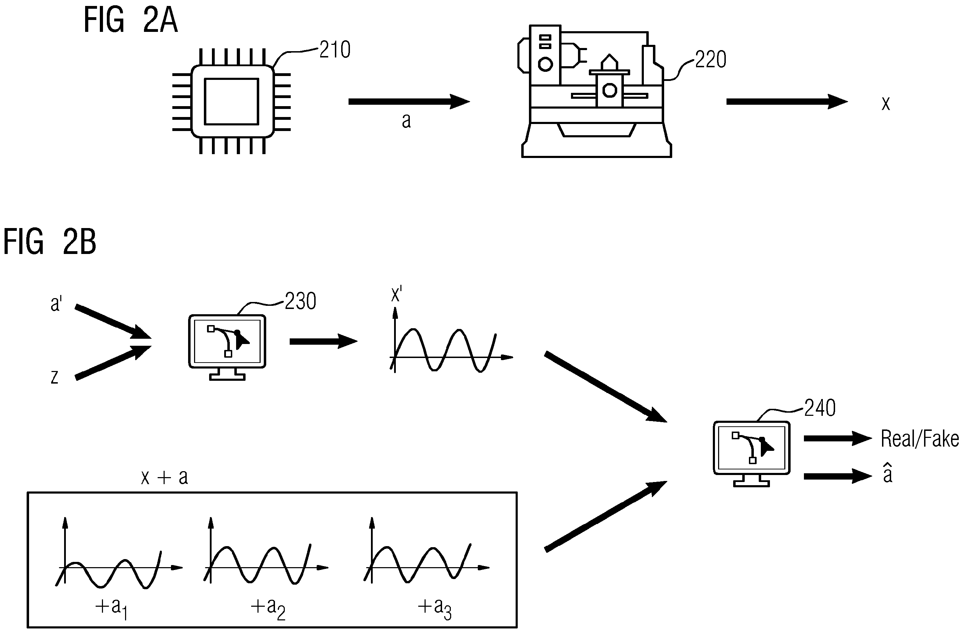

The operation of the system 120 to detect anomalies in the industrial process 110 is further illustrated in Fig. 2A-2C. Fig.2A-2C illustrates training of the GAN to detect anomalies in the industrial process 110, according to an embodiment of the present invention.

Fig 2A illustrates that the industrial process performed by a machine 220 can be classified as actions 'a' that are performed to generate signals 'x'. The actions are operations performed or performable by the machine 220. The machine 220 receives instructions to perform the actions from a controller 210. In some embodiments, the controller 210 is part of the machine 220. In an embodiment, actions a including hold, idle, up_cut, down_cut, up_feed, down feed performable by the machine 220. In an embodiment, the signal x comprises a tuple of the datapoints generated from the sensors associated with the machine 220 and a spectrum. The spectrum is a Fourier transformation of the sensor datapoints. The signals x are referred as standard signals or real signals. Similarly, the actions a are referred to as standard operations/standard actions. A log of the standard operations and standard signals for the machine 220 may also be created using simulated data by simulating a virtual machine replicating the operation of the machine 220.

Fig 2B illustrates the process of training a generator 230 and a discriminator 240 of a GAN architecture. The generator 230 is illustrated as an artificial intelligence module executed on a device 230. The discriminator 240 is illustrated as an artificial intelligence module executed on a device 240.

In Fig 2B, an auxiliary classifier GAN (ACGAN) is illustrated. The ACGAN architecture is a modified GAN architecture. The generator 230 receives an action a' and a noise vector z. The generator 230 generates the signal x', also referred as simulated signals x'. The discriminator 240 receives the simulated signal x', the standard signals x and the standard operations a. In response, the discriminator 240 predicts the authenticity of standard signals x and/or the simulated signals x'. In addition, the discriminator predicts the corresponding action â which led to x or x'.

After the training of the generator 230 and discriminator 240 is converged, the generator 230 is capable of generating a random signal x' for an associated action a'. Training of the discriminator 240 is performed based on the standard signals x and the simulated signals x' generated by the generator 230. The discriminator 240 when trained classifies the standard signals x as valid or invalid. The weights of the discriminator 240 are updated based on a discriminator loss function and/or a generator loss function. The discriminator loss function quantifies a misclassification of the standard signals x as invalid. The generator loss function quantifies classification of the simulated signals x' as invalid. Training of the generator 230 is performed based on an output of the discriminator 240. The generator weights of the generator 230 are updated based on the generator loss function, wherein the generator weights are updated such that the generator 230 is penalized when the discriminator 240 classifies the simulated signal as invalid/fake.

In an embodiment, the discriminator 240 is trained using an updated training dataset i.e. an updated standard signal with associated actions. Accordingly, the updated training dataset includes updated standard operations and updated standard signals generated during runtime of the machine 220. The standard operations i.e. actions a and the standard signals x are compared with the updated standard operations and the updated standard signals to identify a creeping wear in the machine. The discriminator 240 is then trained based on the creeping wear.

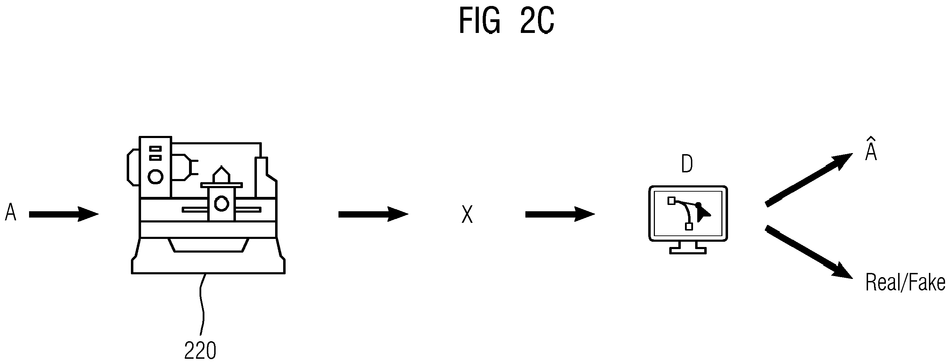

Fig 2C illustrates an operative phase where anomaly is detected in the industrial process during runtime. An operation is to be performed by the machine 220, the operation is illustrated by the input of the action A as a control signal to the machine 220. In response to the action A, the machine 220 generates a signal X. The trained discriminator D then classifies the signal X as real or fake. Further, the trained discriminator D predicts an action Â. An anomaly is detected when the signal X is classified as fake or if the action Â is not action A.

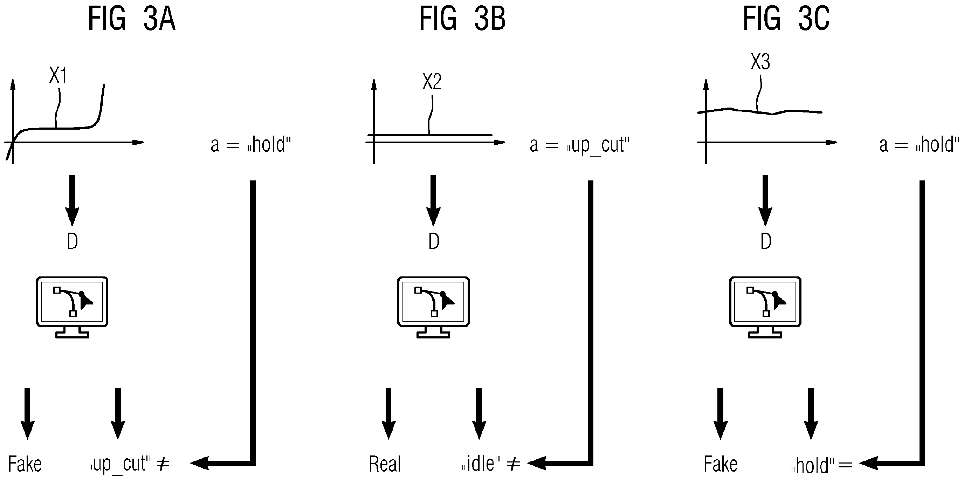

Fig. 3A-C illustrates examples of anomalies detected in the industrial process, according to an embodiment of the present invention. In Fig 3A, action is "hold" and the signal X1 is generated from the machine 220. The trained discriminator D predicts X1 to be fake and the action to be "up_cut". Since X1 is classified as fake and in addition the predicted action is not hold, an anomaly is detected. In Fig 3B, action is "up_cut" and the signal X2 is generated from the machine 220. Even though the signal X2 is classified as real, the predicted action is not "up_cut". Accordingly, an anomaly is detected. In Fig 3C, action is "hold" and the signal X3 is generated from the machine 220. Even though the predicted action is "hold", the signal X3 is classified as fake. Accordingly, an anomaly is detected.

When the anomaly is detected the signals X1, X2 and X3 are analyzed. The signals X1, X2 and X3 include a tuple of the time series data generated by sensors associated with the machine 220 and associated spectrums. In some embodiments, a spectrogram is made part of the signals X1, X2 and X3 in addition to the time series data and the spectrum. The analysis includes a determination of where exactly the anomaly has manifested itself in the signals X1, X2, and X3. It is known which action a was made at runtime and that the signal X1, X2 and X3 are real, saliency maps (or LRP, GradCAM, or other methods) can be used to determine which input has now contributed to the prediction. Specifically, the analysis includes a determination of what needs to be changed in the signals X1, X2 and X3 in order to classify the signal as "real" or to predict the right action. The input gradient provides exactly this information. For example, it could be determined exactly where the break in the signal X1 is, since the input gradient would particularly indicate the peak in the signal X1. Since the peak is very high frequency, one would find a conspicuousness in the spectrum accordingly. In another example, an unwanted vibration (oscillation) can be detected in the spectrum, the gradient can also be used to determine which frequency (or frequency band) has the oscillation that disturbs the machine 220.

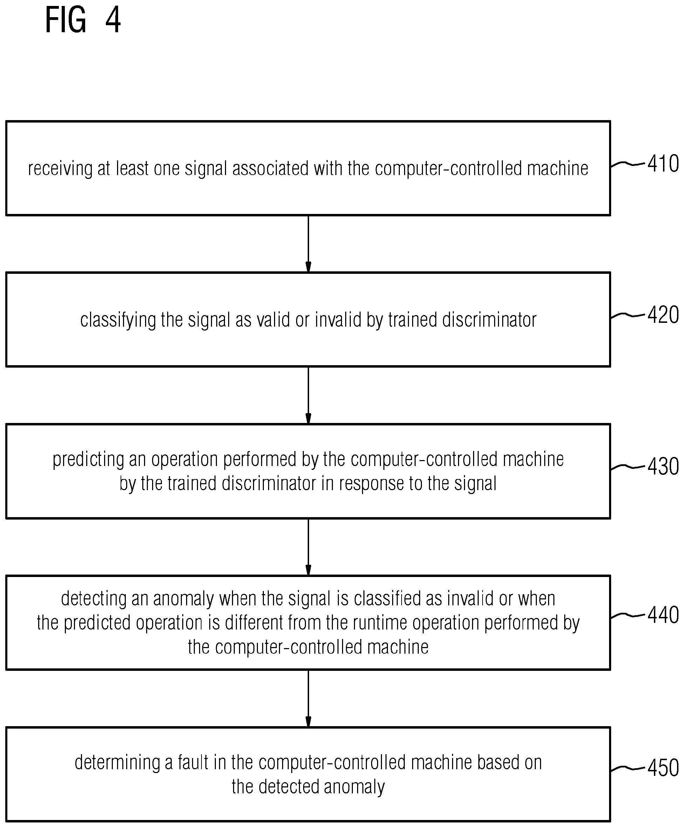

Fig. 4 illustrates a method of detecting at least one anomaly in an industrial process, according to an embodiment of the present invention. the industrial process is performed at least in part by a computer-controlled machine

The method begins at step 410 by receiving at least one signal associated with the machine indicative of a runtime operation performed by the machine. The signal comprises at least one of one or more spectrum and one or more datapoints generated by sensors associated with the machine.

Step 420 includes classifying the signal as valid or invalid by a trained discriminator. The trained discriminator is generated using a Generative Adversarial Network (GAN) architecture and is generated based on standard signals and simulated signals generated by a generator of the GAN architecture. The standard signals comprise at least one of default signals expected from the and prior signals generated from the machine.

Step 430 includes predicting an operation performed by the machine by the trained discriminator in response to the signal.

Step 440 includes detecting the anomaly when the signal is classified as invalid or when the predicted operation is different from the runtime operation performed by the machine.

Step 450 includes determining a fault in the computer-controlled machine based on the detected anomaly, wherein the fault is determined by isolating the anomaly in the spectrum and/or the datapoints. Step 450 may also include identifying at least one portion of the spectrum and/or anomalous datapoints in the signal classified as invalid. The portion of the spectrum and/or anomalous datapoints are mapped to at least one anomalous runtime operation. From the anomalous runtime operation control commands provided to the machine are determined. Further, step 450 may include generating explanations illustrating an impact of the signal classified as invalid on the trained discriminator. The portion of the spectrum and/or anomalous datapoints are mapped to the anomalous runtime operation based on the explanations. Step 450 may furthermore include analyzing the explanations to determine a root cause of the anomaly and the anomalous runtime operation.

The present invention at step 450 may additionally include determining modifications to the signal classified as invalid, wherein the trained discriminator classifies the modified signal as valid. The modified signal is validated when a modified operation predicted for the modified signal is one of standard operations associated with the standard signals, wherein the standard operations are performed to generate the standard signals.

As illustrated in the aforementioned figures, the present invention illustrates a method where the system 120 can independently learn the standard operation of a machine (e.g. 112, 114 and 120) on the basis of process or sensor signals and then detect anomalies. The detected anomalies can be interpreted and classified in a resource-efficient manner at runtime. The invention also allows anomalies to be analyzed more precisely, so that disturbing frequencies or abnormalities in the signal can be identified. Further, the implementation of the invention is by machine readable instructions and therefore can be retrofitted in all machines via software update.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or de-vice) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination there-of) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All advantageous embodiments claimed in method claims may also be apply to system/apparatus claims.

## Claims

1. A method of detecting at least one anomaly in an industrial process (110), wherein the industrial process (110) is performed at least in part by a computer-controlled machine (112, 114 and 220), wherein the method comprises:
receiving at least one signal associated with the computer-controlled machine (112, 114 and 220) indicative of a runtime operation performed by the computer-controlled machine (112, 114 and 220), wherein the signal (X1, X2, X3) comprises at least one of one or more spectrum and one or more datapoints generated by sensors associated with the computer-controlled machine (112, 114 and 220);
classifying the signal (X1, X2, X3) as valid or invalid by a trained discriminator, wherein the trained discriminator is generated using a Generative Adversarial Network (GAN) architecture, wherein the trained discriminator is generated based on standard signals (x) and simulated signals (x') generated by a generator of the GAN architecture, wherein the standard signals (x) comprise at least one of default signals expected from the computer-controlled machine (112, 114 and 220) and prior signals generated from the computer-controlled machine (112, 114 and 220);
predicting an operation performed by the computer-controlled machine (112, 114 and 220) by the trained discriminator in response to the signal (X1, X2, X3);
detecting the anomaly when the signal (X1, X2, X3) is classified as invalid or when the predicted operation is different from the runtime operation performed by the computer-controlled machine (112, 114 and 220);
determining a fault in the computer-controlled machine (112, 114 and 220) based on the detected anomaly, wherein the fault is determined by isolating the anomaly in the spectrum and/or the datapoints.

2. The method according to claim 1, wherein isolating the anomaly comprises:
identifying at least one portion of the spectrum and/or anomalous datapoints in the signal (X1, X2, X3) classified as invalid;
mapping the portion of the spectrum and/or anomalous datapoints to at least one anomalous runtime operation; and
determining control commands provided to the computer-controlled machine (112, 114 and 220) associated with the anomalous runtime operation.

3. The method according to claim 2, further comprises:
generating explanations illustrating an impact of the signal (X1, X2, X3) classified as invalid on the trained discriminator;
mapping the portion of the spectrum and/or anomalous datapoints to the anomalous runtime operation based on the explanations; and
analyzing the explanations to determine a root cause of at least one of the anomaly and the anomalous runtime operation.

4. The method according to claim 1, further comprising:
determining modifications to the signal (X1, X2, X3) classified as invalid, wherein the trained discriminator classifies the modified signal as valid; and
validating the modified signal when a modified operation predicted for the modified signal is one of standard operations associated with the standard signals (x), wherein the standard operations are performed to generate the standard signals (x).

5. The method according to one of claim 1 and claim 2, further comprising:
generating the trained discriminator by:
training a discriminator of the GAN architecture based on the standard signals (x) and the simulated signals (x') generated by the generator of the GAN architecture, wherein the trained discriminator classifies the standard signals (x) as valid or invalid; and
updating discriminator weights of the discriminator based on at least one of a discriminator loss function and a generator loss function, wherein the discriminator loss function quantifies a misclassification of the standard signals (x) as invalid, and wherein the generator loss function quantifies classification of the simulated signals (x') as invalid.

6. The method according to claim 5, wherein generating the trained discriminator further comprise:
training the generator based on an output of the discriminator;
updating generator weights of the generator based on the generator loss function, wherein the generator weights are updated such that the generator is penalized when the discriminator classifies the simulated signal as invalid.

7. The method according to claim 5, further comprising:
training the discriminator of the GAN architecture with an updated training dataset, wherein the updated training dataset includes updated standard operations and updated standard signals (x) generated during runtime of the computer-controlled machine (112, 114 and 220);
comparing the standard operations and the standard signals (x) with the updated standard operations and the updated standard signals (x) to identify a creeping wear in the machine; and
retraining the discriminator based on the creeping wear.

8. The method according to at least one of the preceding claims, wherein the signal further comprises a spectrogram of the datapoints generated from the sensors associated with the computer-controlled machine (112, 114 and 220).

9. The method according to at least one of the preceding claims, wherein the signal further comprises a tuple of the datapoints generated from the sensors associated with the computer-controlled machine (112, 114 and 220) and the spectrum, wherein the spectrum is a Fourier transformation of the datapoints.

10. The method according to at least one of the preceding claims, wherein the computer-controlled machine (112, 114 and 220) is a machine tool and wherein the operation performed by machine and simulation operation comprise actions including hold, idle, up_cut, down_cut, up_feed, down_feed performable by the machine tool.

11. A computer readable medium having machine-readable instructions stored therein, which when executed by a processing unit, cause the processing unit to perform steps according to claims 1 to 10.

12. A system (120) for detecting anomalies in an industrial process (110), the system comprising a server comprising at least one processing unit configured to coordinate execution of one or more the method steps according to claims 1 to 10 executable in a distributed computing environment.

13. The system (120) according to claim 12, further comprising a datahub configured to store the operations, the signals, the standard operations, the standard signals (x) associated with the industrial process (110) and wherein the processing unit is configured to train the generator and the discriminator of Generative Adversarial Neural Network (GAN) with the standard operations and the standard signals (x).
